Europäisches Patentamt

European Patent Office

Office européen des brevets

(11) Publication number: **0 252 772**
**A1**

# EUROPEAN PATENT APPLICATION

(21) Application number: 87306428.1

(22) Date of filing: 20.07.87

(51) Int. Cl.⁴: **H 04 B 9/00**

(30) Priority: 28.06.86 GB 8615871

(43) Date of publication of application:
**13.01.88 Bulletin 88/02**

(84) Designated Contracting States: **DE FR GB NL**

(71) Applicant: **PLESSEY OVERSEAS LIMITED**
**Vicarage Lane**
**Ilford Essex IGI 4AQ (GB)**

(72) Inventor: **Stewart, William James**
**The Manor House High Street**
**Blakesley Northampton, NN12 8RE (GB)**

(74) Representative: **Pritchard, Evan**
**Intellectual Property Department The Plessey Company**
**plc Vicarage Lane**
**Ilford Essex IG1 4AQ (GB)**

The provisions of Art. 87(1) EPC are considered to have been observed pursuant to the notice of the President of the EPO concerning extension of time limits according to Rule 85(2) EPC published in Official Journal 8/1987, page 385.

(54) Coherent light communication system.

(57) A coherent light communication system comprises a transmitter (3) capable of passing a signal comprising a proportion of carrier wave modulated by a signal for transmission and a proportion of unmodulated carrier wave, the two proportions being in different polarisation modes, into an optical communication channel (6), and a system receiver (7) comprising a polarisation selective amplifier (I3) arranged for amplifying the said unmodulated proportion, the two polarisation states then being combined in a receiver to reproduce the required transmitted signal.

Bundesdruckerei Berlin

**Description**

## COHERENT LIGHT COMMUNICATION SYSTEM

This invention relates to a coherent light communication system.

In the construction of a system for transmitting signals optically, it has been proposed to use optical homodyne detection since this offers the optimum receiver sensitivity and it can be more efficient in its use of receiver bandwidth than would be a heterodyne detection system.

A receiver for optical homodyne detection would need to be optically phase-locked to the transmitter and the question of how this condition can be achieved presents a problem if undue complexity and excessive laser linewidth requirements are to be avoided. One solution to the problem has proposed the use of an amplification technique whereby a pump laser at the receiver end is used to feed energy back down the transmission path toward the transmitter. This serves to selectively amplify a carrier component of the received optical signal prior to photodetection by making use of the backward wave stimulated Brilloun scattering effect. The resulting Brilloun gain can enable the carrier to be distinguished from the sidebands without any need for an optoelectronic phase locking control.

The present invention was devised to provide an alternative system by which the carrier can be distinguished from the sidebands.

According to the invention, there is provided a coherent light communication system, the system comprising a transmitter capable of passing a signal comprising a proportion of carrier wave modulated by a signal for transmission and a proportion of unmodulated carrier wave, the two proportions being in different polarisation modes, into an optical communication channel, and a system receiver comprising a polarisation selective amplifier arranged for amplifying the said unmodulated proportion, the two polarisation modes then being recombined in a receiver to reproduce the required transmitted signal.

The polarisation selective amplifier may be formed by a polarisation splitter together with an optical amplifier arranged for amplifying the said unmodulated carrier wave proportion. A polariser may be used to cause optical interference between the two polarisation modes after the optical amplification stage.

Preferably, the optical communication channel is an optical fibre. The two polarisation modes may be aligned orthogonally with one another.

The invention also comprises a coherent light communication receiver for the communication system.

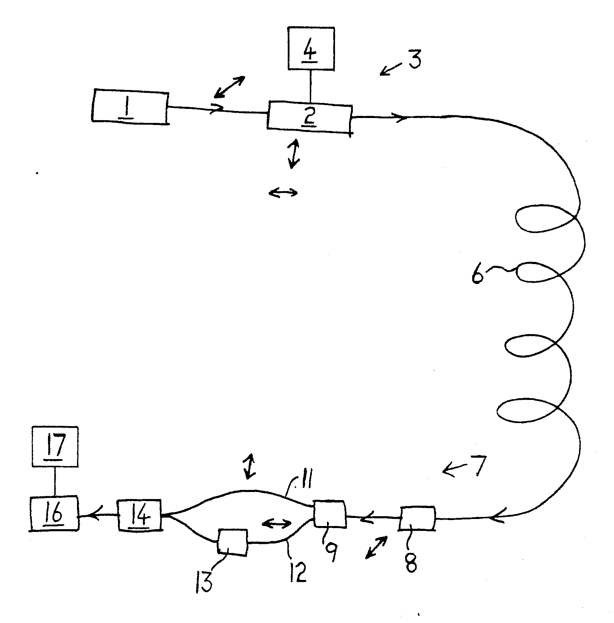

By way of example, a particular embodiment of the invention will now be described with reference to the accompanying drawing, the single Figure of which shows a coherent light communication system.

As shown in the Figure, the optical communication system comprises a laser light source I which together with an integrated optic modulator 2 forms a coherent light optical transmitter 3. The modulator 2 is controlled by an input unit 4 which serves to apply a signal to be transmitted to one polarisation mode of the light passing through the modulator. Light signals from the transmitter 3 are passed along a communication channel which in this embodiment is an optical fibre 6.

At a far end of the optical fibre 6, a system receiver 7 comprises a polarisation controller 8, a polarisation splitter 9 which divides the received signal into two polarisation modes, one of which is a 90 polarisation mode which is directed along a line II. A 0° polarisation mode signal is directed along a line I2 and this passes through an optical amplifier I3. The two polarisation mode signals then pass through a polariser I4 which acts to cause interference between the modes and the resulting ouput is received by a detector I6. An output from the detector is applied to an output unit I7.

In operation, the required carrier wave is generated by the laser light source I and launched as linear polarised light having a polarisation angle of 45 into the modulator 2 which is a gas modulator and which modulates only the 90° component of the two 0° and 90° components of the input. The modulation in the signal is provided by the input unit 4.

The two polarisation modes comprising the modulated and unmodulated proportions pass along the length of the optical fibre 6 to the system receiver 7.

At the receiver 7, the signals pass through the polarisation controller 8 which senses the state of polarisation of the wave emerging from the fibre and makes any necessary adjustment of the polarisation format. The signals then enter the polarisation splitter 9 where they are divided again into the 90° and the 0° polarisation modes. The 90° polarisation mode passes along the line II to the polariser I4. The 0° polarisation mode signal passes through the optical amplifier I3 before entering the polariser I4. The polariser I4 causes optical interference between the two polarisation modes such that the carrier and sideband signals become separated again.

The sideband signals then pass to the detector I6 which may be a photodiode and this detects the intensity of the emerging light which is proportional to the square of the amplitude. The detected signal is received at the output unit I7 and this gives the required transmitted information.

The foregoing description of an embodiment of the invention has been given by way of example only and a number of modifications may be made without departing from the scope of the invention as defined in the appended claims. For instance, it is not essential that the signal transmission should rely on two transmission modes that are aligned perpendicular to one another, in a different embodiment, the polarisation might be circular.

## Claims

1. A coherent light communication system the system comprising a transmitter capable of passing a signal comprising a proportion of carrier wave modulated by a signal for transmission and a proportion of unmodulated carrier wave, the two proportions being in different polarisation modes, into an optical communication channel, and a system receiver comprising a polarisation selective amplifier arranged for amplifying the said unmodulated proportion, the two polarisation modes then being recombined in a receiver to reproduce the required transmitted signal.

2. A system as claimed in Claim 1, in which the said polarisation selective amplifier is formed by a polarisation splitter together with an optical amplifier arranged for amplifying the said unmodulated carrier wave proportion.

3. A system as claimed in Claim 1 or 2, in which the recombination of said polarisation modes is effected by a polariser located after the optical amplifier.

4. A system as claimed in any one of Claims 1 to 3, in which the communication channel is an optical fibre.

5. A system as claimed in any one of Claims 1 to 4, in which the two polarisation modes are aligned orthogonally of one another.

6. A coherent light communication system substantially as hereinbefore described with reference to the accompanying drawing.

7. A coherent light optical receiver for a communication system as claimed in any one of Claims 1 to 6.

0252772

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 84 (E-239)[1521], 18th April 1984; & JP-A-59 5757 (NIPPON DENSHIN DENWA KOSHA) 12-01-1984 * Abstract * ----- | 1,2,4-7 | H 04 B 9/00 |

**TECHNICAL FIELDS SEARCHED (Int. Cl.4)**

H 04 B

The present search report has been drawn up for all claims

| Place of search | Date of completion of the search | Examiner |
|---|---|---|
| THE HAGUE | 13-10-1987 | GEISLER J.A.R. |